# EUROPEAN PATENT APPLICATION

(11) **EP 4 475 449 A1**
(43) Date of publication of application: **11.12.2024**
(21) Application number: 23178244.2
(22) Date of filing: 08.06.2023
(51) Int. Cl.: H04B 7/0404, H04B 7/06, H04L 5/00, H04L 25/02

(54) **FACILITATING UE-ASSISTED AND PARTIAL ANTENNA GEOMETRY-AIDED DOWNLINK CHANNEL ESTIMATION**

(71) Applicant: Nokia Technologies Oy, 02610 Espoo (FI)
(72) Inventor: GOUDA, Bikshapathi, 90570 Oulu (FI); ARVOLA, Antti, 90570 Oulu (FI); TÖLLI, Antti, 90650 Oulu (FI); KARJALAINEN, Juha Pekka, 88600 Sotkamo (FI); HAKOLA, Sami-Jukka, 90450 Kempele (FI); KOSKELA, Timo, 90670 Oulu (FI)
(74) Representative: Page White Farrer

(57) **Abstract**

An apparatus comprising: means for receiving, from a base station, configuration information for at least one reference signal, the configuration information comprising at least one of the following: antenna geometry of the base station; a first indication of at least one antenna of the apparatus to use for measuring the at least one reference signal; a second indication of resources used for the at least one reference signal; a third indication of feedback information requested from the apparatus for the at least one reference signal; wherein the apparatus comprises: means for receiving, from the base station, the at least one reference signal, wherein the at least one reference signal is received from a subset of antennas of the base station; means for determining, using the configuration information, at least one measurement of the at least one reference signal; means for sending, to the base station, the at least one measurement of the at least one reference signal.

## Description

### FIELD

The subject application relates to a method, apparatus, system and computer program for MIMO in near-field communication.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system, at least a part of a communication session between at least two stations occurs over a wireless link. Examples of wireless systems comprise public land mobile networks (PLMN), satellite-based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices can operate in accordance with a given standard or specification which sets forth what the various entities associated with the system are permitted to do and how that should be achieved. Communication protocols and/or parameters which are to be used for the connection can also be defined.

### SUMMARY

According to a first example, there is provided an apparatus comprising: means for receiving, from a base station, configuration information for at least one reference signal, the configuration information comprising at least one of the following: antenna geometry of the base station; a first indication of at least one antenna of the apparatus to use for measuring the at least one reference signal; a second indication of resources used for the at least one reference signal; or a third indication of feedback information requested from the apparatus for the at least one reference signal; wherein the apparatus comprises: means for receiving, from the base station, the at least one reference signal, wherein the at least one reference signal is received from a subset of antennas of the base station; means for determining, using the configuration information, at least one measurement of the at least one reference signal; means for sending, to the base station, the at least one measurement of the at least one reference signal.

According to some examples, the subset of antennas of the base station comprises a single antenna.

According to some examples, the configuration information comprises the antenna geometry of the base station, and wherein the antenna geometry of the base station comprises at least one of the following: a geometry of active antennas at the base station; a distance between active antennas of the base station; a fourth indication of at least one active antenna at the base station; or a fifth indication of a reference antenna of the base station.

According to some examples, the configuration information comprises at least one Transmission Configuration Indicator, TCI, state of the at least one active antenna of the base station.

According to some examples, wherein the configuration information comprises the first indication of at least one antenna of the apparatus to use, and wherein the first indication of at least one antenna of the apparatus to use comprises at least one of the following: a sixth indication of at least one active antenna at the apparatus; a seventh indication of a reference antenna of the apparatus; or an eighth indication of beams of the apparatus.

According to some examples, the configuration information comprises the second indication of resources used for the at least one reference signal, the second indication of resources used for the at least one reference signal comprising at least one of the following: a ninth indication of at least one time resource; a tenth indication of at least one frequency resource; or an eleventh indication of at least one code resource.

According to some examples, the at least one frequency resource used for the at least one reference signal is different to a frequency resource used for data transmission by the apparatus.

According to some examples, the configuration information comprises the third indication of feedback information requested from the apparatus for the at least one reference signal, the third indication of feedback information requesting at least one of the following: a twelfth indication of whether the apparatus should report measurements for each active antenna of the apparatus separately; a thirteenth indication of whether the apparatus should report a single set of measurements with respect to a reference signal of the base station; a fourteenth indication of whether Angle of Arrival, AoA, measurements for at least one reference signal should be provided by the apparatus; a fifteenth indication of whether at least one apparatus rotation measurement with respect to the base station should be provided by the apparatus; a sixteenth indication of whether channel gain measurements for at least one reference signal should be provided by the apparatus; or a seventeenth indication of whether distance from at least one apparatus reference antenna to a base station reference antenna should be provided.

According to some examples, the apparatus comprises: means for receiving, from the base station, an indication of channel state information determined by the base station based on the at least one measurement of the at least one reference signal; means for performing data transmission and/or data reception based on the channel state information.

According to some examples, the data transmission and/or the data reception comprises near-field communication.

According to some examples, the data transmission and/or the data reception comprises Line of Sight, LoS, communication.

According to some examples, the configuration information comprises an indication of at least one analog beam used at the base station.

According to a second example, there is provided a method comprising: receiving, from a base station, configuration information for at least one reference signal, the configuration information comprising at least one of the following: antenna geometry of the base station; a first indication of at least one antenna of the user equipment to use for measuring the at least one reference signal; a second indication of resources used for the at least one reference signal; a third indication of feedback information requested from the user equipment for the at least one reference signal; wherein the method comprises; receiving, from the base station, the at least one reference signal, wherein the at least one reference signal is received from a subset of antennas of the base station; determining, using the configuration information, at least one measurement of the at least one reference signal; sending, to the base station, the at least one measurement of the at least one reference signal.

According to some examples, the subset of antennas of the base station comprises a single antenna.

According to some examples, the configuration information comprises the antenna geometry of the base station, and wherein the antenna geometry of the base station comprises at least one of the following: a geometry of active antennas at the base station; a distance between active antennas of the base station; a fourth indication of at least one active antenna at the base station; or a fifth indication of a reference antenna of the base station.

According to some examples, the configuration information comprises at least one Transmission Configuration Indicator, TCI, state of the at least one active antenna of the base station.

According to some examples, wherein the configuration information comprises the first indication of at least one antenna of the user equipment to use, and wherein the first indication of at least one antenna of the user equipment to use comprises at least one of the following: a sixth indication of at least one active antenna at the user equipment; a seventh indication of a reference antenna of the user equipment or an eighth indication of beams of the user equipment.

According to some examples, the configuration information comprises the second indication of resources used for the at least one reference signal, the second indication of resources used for the at least one reference signal comprising at least one of the following: a ninth indication of at least one time resource; a tenth indication of at least one frequency resource; or an eleventh indication of at least one code resource.

According to some examples, the at least one frequency resource used for the at least one reference signal is different to a frequency resource used for data transmission by the user equipment.

According to some examples, the configuration information comprises the third indication of feedback information requested from the user equipment for the at least one reference signal, the third indication of feedback information requesting at least one of the following: a twelfth indication of whether the user equipment should report measurements for each active antenna of the user equipment separately; a thirteenth indication of whether the user equipment should report a single set of measurements with respect to a reference signal of the base station; a fourteenth indication of whether Angle of Arrival, AoA, measurements for at least one reference signal should be provided by the user equipment; a fifteenth indication of whether at least one user equipment rotation measurement with respect to the base station should be provided by the user equipment; a sixteenth indication of whether channel gain measurements for at least one reference signal should be provided by the user equipment; or a seventeenth indication of whether distance from at least one user equipment reference antenna to a base station reference antenna should be provided.

According to some examples, the method comprises: receiving, from the base station, an indication of channel state information determined by the base station based on the at least one measurement of the at least one reference signal; performing data transmission and/or data reception based on the channel state information.

According to some examples, the data transmission and/or the data reception comprises near-field communication.

According to some examples, the data transmission and/or the data reception comprises Line of Sight, LoS, communication.

According to some examples, the configuration information comprises an indication of at least one analog beam used at the base station.

According to a third example, there is provided an apparatus comprising at least one processor and at least one memory storing instructions that, when executed by the at least one processor, cause the apparatus at least to perform: receiving, from a base station, configuration information for at least one reference signal, the configuration information comprising at least one of the following: antenna geometry of the base station; a first indication of at least one antenna of the apparatus to use for measuring the at least one reference signal; a second indication of resources used for the at least one reference signal; or a third indication of feedback information requested from the apparatus for the at least one reference signal; wherein the at least one memory and the computer program code are configured to, with the at least one processor, cause the apparatus at least to perform: receiving, from the base station, the at least one reference signal, wherein the at least one reference signal is received from a subset of antennas of the base station; determining, using the configuration information, at least one measurement of the at least one reference signal; sending, to the base station, the at least one measurement of the at least one reference signal.

According to some examples, the subset of antennas of the base station comprises a single antenna.

According to some examples, the configuration information comprises the antenna geometry of the base station, and wherein the antenna geometry of the base station comprises at least one of the following: a geometry of active antennas at the base station; a distance between active antennas of the base station; a fourth indication of at least one active antenna at the base station; or a fifth indication of a reference antenna of the base station.

According to some examples, the configuration information comprises at least one Transmission Configuration Indicator, TCI, state of the at least one active antenna of the base station.

According to some examples, wherein the configuration information comprises the first indication of at least one antenna of the apparatus to use, and wherein the first indication of at least one antenna of the apparatus to use comprises at least one of the following: a sixth indication of at least one active antenna at the apparatus; a seventh indication of a reference antenna of the apparatus; or an eighth indication of beams of the apparatus.

According to some examples, the configuration information comprises the second indication of resources used for the at least one reference signal, the second indication of resources used for the at least one reference signal comprising at least one of the following: a ninth indication of at least one time resource; a tenth indication of at least one frequency resource; or an eleventh indication of at least one code resource.

According to some examples, the at least one frequency resource used for the at least one reference signal is different to a frequency resource used for data transmission by the apparatus.

According to some examples, the configuration information comprises the third indication of feedback information requested from the apparatus for the at least one reference signal, the third indication of feedback information requesting at least one of the following: a twelfth indication of whether the apparatus should report measurements for each active antenna of the apparatus separately; a thirteenth indication of whether the apparatus should report a single set of measurements with respect to a reference signal of the base station; a fourteenth indication of whether Angle of Arrival, AoA, measurements for at least one reference signal should be provided by the apparatus; a fifteenth indication of whether at least one apparatus rotation measurement with respect to the base station should be provided by the apparatus; a sixteenth indication of whether channel gain measurements for at least one reference signal should be provided by the apparatus; or a seventeenth indication of whether distance from at least one apparatus reference antenna to a base station reference antenna should be provided.

According to some examples, the at least one memory and the computer program code are configured to, with the at least one processor, cause the apparatus at least to perform: receiving, from the base station, an indication of channel state information determined by the base station based on the at least one measurement of the at least one reference signal; performing data transmission and/or data reception based on the channel state information.

According to some examples, the data transmission and/or the data reception comprises near-field communication.

According to some examples, the data transmission and/or the data reception comprises Line of Sight, LoS, communication.

According to some examples, the configuration information comprises an indication of at least one analog beam used at the base station.

According to a fourth example there is provided an apparatus comprising: circuitry for: receiving, from a base station, configuration information for at least one reference signal, the configuration information comprising at least one of the following: antenna geometry of the base station; a first indication of at least one antenna of the apparatus to use for measuring the at least one reference signal; a second indication of resources used for the at least one reference signal; or a third indication of feedback information requested from the apparatus for the at least one reference signal; and circuity for: receiving, from the base station, the at least one reference signal, wherein the at least one reference signal is received from a subset of antennas of the base station; determining, using the configuration information, at least one measurement of the at least one reference signal; sending, to the base station, the at least one measurement of the at least one reference signal.

According to a fifth example there is provided a computer program comprising instructions for causing an apparatus to perform at least the following: receiving, from a base station, configuration information for at least one reference signal, the configuration information comprising at least one of the following: antenna geometry of the base station; a first indication of at least one antenna of the apparatus to use for measuring the at least one reference signal; a second indication of resources used for the at least one reference signal; or a third indication of feedback information requested from the apparatus for the at least one reference signal; receiving, from the base station, the at least one reference signal, wherein the at least one reference signal is received from a subset of antennas of the base station; determining, using the configuration information, at least one measurement of the at least one reference signal; sending, to the base station, the at least one measurement of the at least one reference signal.

According to a sixth example there is provided a computer program comprising instructions stored thereon for performing at least the following: receiving, from a base station, configuration information for at least one reference signal, the configuration information comprising at least one of the following: antenna geometry of the base station; a first indication of at least one antenna of a user equipment to use for measuring the at least one reference signal; a second indication of resources used for the at least one reference signal; or a third indication of feedback information requested from the user equipment for the at least one reference signal; receiving, from the base station, the at least one reference signal, wherein the at least one reference signal is received from a subset of antennas of the base station; determining, using the configuration information, at least one measurement of the at least one reference signal; sending, to the base station, the at least one measurement of the at least one reference signal.

According to a seventh example there is provided a non-transitory computer readable medium comprising program instructions for causing an apparatus to perform at least the following: receiving, from a base station, configuration information for at least one reference signal, the configuration information comprising at least one of the following: antenna geometry of the base station; a first indication of at least one antenna of the apparatus to use for measuring the at least one reference signal; a second indication of resources used for the at least one reference signal; or a third indication of feedback information requested from the apparatus for the at least one reference signal; receiving, from the base station, the at least one reference signal, wherein the at least one reference signal is received from a subset of antennas of the base station; determining, using the configuration information, at least one measurement of the at least one reference signal; sending, to the base station, the at least one measurement of the at least one reference signal.

According to an eighth example there is provided a non-transitory computer readable medium comprising program instructions stored thereon for performing at least the following: receiving, from a base station, configuration information for at least one reference signal, the configuration information comprising at least one of the following: antenna geometry of the base station; a first indication of at least one antenna of a user equipment to use for measuring the at least one reference signal; a second indication of resources used for the at least one reference signal; or a third indication of feedback information requested from the user equipment for the at least one reference signal; receiving, from the base station, the at least one reference signal, wherein the at least one reference signal is received from a subset of antennas of the base station; determining, using the configuration information, at least one measurement of the at least one reference signal; sending, to the base station, the at least one measurement of the at least one reference signal.

According to a ninth example there is provided an apparatus comprising: means for sending, to a user equipment, configuration information for at least one reference signal, the configuration information comprising at least one of the following: antenna geometry of the apparatus; a first indication of at least one antenna of the user equipment to use for measuring the at least one reference signal; a second indication of resources used for the at least one reference signal; a third indication of feedback information requested from the user equipment for the at least one reference signal; wherein the apparatus comprises: means for sending, to the user equipment, the at least one reference signal, wherein the at least one reference signal is sent by a subset of antennas of the apparatus; means for receiving, from the user equipment, at least one measurement of the at least one reference signal; means for determining channel state information based on the at least one measurement of the at least one reference signal and the configuration information.

According to some examples, the channel state information is for a plurality of antennas of the apparatus, wherein the subset of antennas is a subset of the plurality of antennas of the apparatus.

According to some examples, the configuration information comprises the antenna geometry of the apparatus, and wherein the antenna geometry of the apparatus comprises at least one of the following: a geometry of active antennas at the apparatus; a distance between active antennas of the apparatus; a fourth indication of at least one active antenna at the apparatus; or a fifth indication of a reference antenna of the apparatus.

According to some examples, the apparatus comprises: means for sending, to the user equipment, an indication of the channel state information.

According to some examples, the configuration information comprises an indication of at least one analog beam used at the apparatus.

According to some examples, the configuration information comprises at least one Transmission Configuration Indicator, TCI, state of the at least one active antenna of the apparatus.

According to some examples, the configuration information comprises the first indication of at least one antenna of the user equipment to use for measuring the at least one reference signal, and wherein the first indication of at least one antenna of the user equipment to use comprises at least one of the following: a sixth indication of at least one active antenna at the user equipment; a seventh indication of a reference antenna of the user equipment; or an eighth indication of beams of the user equipment.

According to some examples, the configuration information comprises the second indication of resources used for the at least one reference signal, the second indication of resources used for the at least one reference signal comprising at least one of the following: a ninth indication of at least one time resource; a tenth indication of at least one frequency resource; or an eleventh indication of at least one code resource.

According to some examples, the configuration information comprises the third indication of feedback information requested from the user equipment for the at least one reference signal, the third indication of feedback information comprising at least one of the following: a twelfth indication of whether the user equipment should report measurements for each active antenna of the apparatus separately; a thirteenth indication of whether the user equipment should report a single set of measurements with respect to a reference signal of the user equipment; a fourteenth indication of whether Angle of Arrival, AoA, measurements for at least one reference signal should be provided by the user equipment; a fifteenth indication of whether at least one user equipment rotation measurement with respect to the apparatus should be provided by the user equipment; a sixteenth indication of whether channel gain measurements for at least one reference signal should be provided by the user equipment; or a seventeenth indication of whether distance from at least one user equipment reference antenna to a reference antenna of the apparatus should be provided.

According to a tenth example there is provided a method comprising: sending, to a user equipment, configuration information for at least one reference signal, the configuration information comprising at least one of the following: antenna geometry of a base station; a first indication of at least one antenna of the user equipment to use for measuring the at least one reference signal; a second indication of resources used for the at least one reference signal; or a third indication of feedback information requested from the user equipment for the at least one reference signal; wherein the method comprises: sending, to the user equipment, the at least one reference signal; receiving, from the user equipment, at least one measurement of the at least one reference signal, wherein the at least one reference signal is sent by a subset of antennas of the base station; determining channel state information based on the at least one measurement of the at least one reference signal and the configuration information.

According to some examples, the channel state information is for a plurality of antennas of the base station, wherein the subset of antennas is a subset of the plurality of antennas of the base station.

According to some examples, the configuration information comprises the antenna geometry of the base station, and wherein the antenna geometry of the base station comprises at least one of the following: a geometry of active antennas at the base station; a distance between active antennas of the base station; a fourth indication of at least one active antenna at the base station; or a fifth indication of a reference antenna of the base station.

According to some examples, the method comprises: sending, to the user equipment, an indication of the channel state information.

According to some examples, the configuration information comprises an indication of at least one analog beam used at the base station.

According to some examples, the configuration information comprises at least one Transmission Configuration Indicator, TCI, state of the at least one active antenna of the base station.

According to some examples, the configuration information comprises the first indication of at least one antenna of the user equipment to use for measuring the at least one reference signal, and wherein the first indication of at least one antenna of the user equipment to use comprises at least one of the following: a sixth indication of at least one active antenna at the user equipment; a seventh indication of a reference antenna of the user equipment; or an eighth indication of beams of the user equipment.

According to some examples, the configuration information comprises the second indication of resources used for the at least one reference signal, the second indication of resources used for the at least one reference signal comprising at least one of the following: a ninth indication of at least one time resource; a tenth indication of at least one frequency resource; or an eleventh indication of at least one code resource.

According to some examples, the configuration information comprises the third indication of feedback information requested from the user equipment for the at least one reference signal, the third indication of feedback information comprising at least one of the following: a twelfth indication of whether the user equipment should report measurements for each active antenna of the base station separately; a thirteenth indication of whether the user equipment should report a single set of measurements with respect to a reference signal of the user equipment; a fourteenth indication of whether Angle of Arrival, AoA, measurements for at least one reference signal should be provided by the user equipment; a fifteenth indication of whether at least one user equipment rotation measurement with respect to the base station should be provided by the user equipment; a sixteenth indication of whether channel gain measurements for at least one reference signal should be provided by the user equipment; or a seventeenth indication of whether distance from at least one user equipment reference antenna to a reference antenna of the base station should be provided.

According to an eleventh example there is provided an apparatus comprising: at least one processor; and at least one memory including computer program code; the at least one memory and the computer program code configured to, with the at least one processor, cause the apparatus at least to perform: sending, to a user equipment, configuration information for at least one reference signal, the configuration information comprising at least one of the following: antenna geometry of the apparatus; a first indication of at least one antenna of the user equipment to use for measuring the at least one reference signal; a second indication of resources used for the at least one reference signal; a third indication of feedback information requested from the user equipment for the at least one reference signal; and wherein the at least one memory and the computer program code are configured to, with the at least one processor, cause the apparatus at least to perform: sending, to the user equipment, the at least one reference signal, wherein the at least one reference signal is sent by a subset of antennas of the apparatus; means for receiving, from the user equipment, at least one measurement of the at least one reference signal; means for determining channel state information based on the at least one measurement of the at least one reference signal and the configuration information.

According to some examples, the channel state information is for a plurality of antennas of the apparatus, wherein the subset of antennas is a subset of the plurality of antennas of the apparatus.

According to some examples, the configuration information comprises the antenna geometry of the apparatus, and wherein the antenna geometry of the apparatus comprises at least one of the following: a geometry of active antennas at the apparatus; a distance between active antennas of the apparatus; a fourth indication of at least one active antenna at the apparatus; or a fifth indication of a reference antenna of the apparatus.

According to some examples, the at least one memory and the computer program code are configured to, with the at least one processor, cause the apparatus at least to perform: sending, to the user equipment, an indication of the channel state information.

According to some examples, the configuration information comprises an indication of at least one analog beam used at the apparatus.

According to some examples, the configuration information comprises at least one Transmission Configuration Indicator, TCI, state of the at least one active antenna of the apparatus.

According to some examples, the configuration information comprises the first indication of at least one antenna of the user equipment to use for measuring the at least one reference signal, and wherein the first indication of at least one antenna of the user equipment to use comprises at least one of the following: a sixth indication of at least one active antenna at the user equipment; a seventh indication of a reference antenna of the user equipment; or an eighth indication of beams of the user equipment.

According to some examples, the configuration information comprises the second indication of resources used for the at least one reference signal, the second indication of resources used for the at least one reference signal comprising at least one of the following: a ninth indication of at least one time resource; a tenth indication of at least one frequency resource; or an eleventh indication of at least one code resource.

According to some examples, the configuration information comprises the third indication of feedback information requested from the user equipment for the at least one reference signal, the third indication of feedback information comprising at least one of the following: a twelfth indication of whether the user equipment should report measurements for each active antenna of the apparatus separately; a thirteenth indication of whether the user equipment should report a single set of measurements with respect to a reference signal of the user equipment; a fourteenth indication of whether Angle of Arrival, AoA, measurements for at least one reference signal should be provided by the user equipment; a fifteenth indication of whether at least one user equipment rotation measurement with respect to the apparatus should be provided by the user equipment; a sixteenth indication of whether channel gain measurements for at least one reference signal should be provided by the user equipment; or a seventeenth indication of whether distance from at least one user equipment reference antenna to a reference antenna of the apparatus should be provided.

According to a twelfth example there is provided an apparatus comprising circuitry for: sending, to a user equipment, configuration information for at least one reference signal, the configuration information comprising at least one of the following: antenna geometry of the apparatus; a first indication of at least one antenna of the user equipment to use for measuring the at least one reference signal; a second indication of resources used for the at least one reference signal; a third indication of feedback information requested from the user equipment for the at least one reference signal; and circuitry for sending, to the user equipment, the at least one reference signal, wherein the at least one reference signal is sent by a subset of antennas of the apparatus; means for receiving, from the user equipment, at least one measurement of the at least one reference signal; means for determining channel state information based on the at least one measurement of the at least one reference signal and the configuration information.

According to a thirteenth example there is provided a computer program comprising instructions for causing an apparatus to perform at least the following: sending, to a user equipment, configuration information for at least one reference signal, the configuration information comprising at least one of the following: antenna geometry of the apparatus; a first indication of at least one antenna of the user equipment to use for measuring the at least one reference signal; a second indication of resources used for the at least one reference signal; a third indication of feedback information requested from the user equipment for the at least one reference signal; and sending, to the user equipment, the at least one reference signal, wherein the at least one reference signal is sent by a subset of antennas of the apparatus; means for receiving, from the user equipment, at least one measurement of the at least one reference signal; means for determining channel state information based on the at least one measurement of the at least one reference signal and the configuration information.

According to a fourteenth example there is provided a computer program comprising instructions stored thereon for performing at least the following: sending, to a user equipment, configuration information for at least one reference signal, the configuration information comprising at least one of the following: antenna geometry of a base station; a first indication of at least one antenna of the user equipment to use for measuring the at least one reference signal; a second indication of resources used for the at least one reference signal; a third indication of feedback information requested from the user equipment for the at least one reference signal; and sending, to the user equipment, the at least one reference signal, wherein the at least one reference signal is sent by a subset of antennas of the base station; means for receiving, from the user equipment, at least one measurement of the at least one reference signal; means for determining channel state information based on the at least one measurement of the at least one reference signal and the configuration information.

According to a fifteenth example there is provided a non-transitory computer readable medium comprising program instructions for causing an apparatus to perform at least the following: sending, to a user equipment, configuration information for at least one reference signal, the configuration information comprising at least one of the following: antenna geometry of the apparatus; a first indication of at least one antenna of the user equipment to use for measuring the at least one reference signal; a second indication of resources used for the at least one reference signal; a third indication of feedback information requested from the user equipment for the at least one reference signal; and sending, to the user equipment, the at least one reference signal, wherein the at least one reference signal is sent by a subset of antennas of the apparatus; means for receiving, from the user equipment, at least one measurement of the at least one reference signal; means for determining channel state information based on the at least one measurement of the at least one reference signal and the configuration information.

According to a sixteenth example there is provided a non-transitory computer readable medium comprising program instructions stored thereon for performing at least the following: sending, to a user equipment, configuration information for at least one reference signal, the configuration information comprising at least one of the following: antenna geometry of a base station; a first indication of at least one antenna of the user equipment to use for measuring the at least one reference signal; a second indication of resources used for the at least one reference signal; a third indication of feedback information requested from the user equipment for the at least one reference signal; and sending, to the user equipment, the at least one reference signal, wherein the at least one reference signal is sent by a subset of antennas of the base station; means for receiving, from the user equipment, at least one measurement of the at least one reference signal; means for determining channel state information based on the at least one measurement of the at least one reference signal and the configuration information.

According to an example, there is provided a non-transitory computer readable medium comprising program instructions that, when executed by an apparatus, cause the apparatus to perform at least the method according to any of the preceding examples.

In the above, many different examples have been described. It should be appreciated that further examples may be provided by the combination of any two or more of the examples described above.

### DESCRIPTION OF FIGURES

Some examples will now be described, by way of illustration only, with reference to the accompanying Figures in which:
FIG. 1 shows an example message flow;
FIG. 2 shows an example orientation between a base station and a user equipment;
FIG. 3 shows a method flow diagram according to some examples;
FIG. 4 shows a method flow diagram according to some examples;
FIG. 5 shows an example apparatus;
FIG. 6 shows an example apparatus; and
FIG. 7 shows a schematic representation of a non-volatile memory medium storing instructions which when executed by a processor allow a processor to perform one or more of the steps of the methods disclosed herein.

### DETAILED DESCRIPTION

In the following certain examples are explained with reference to wireless communication. Some examples describe a method of sending messages between at least one User Equipment (UE) and a base station (e.g., a gNB) to configure the UE(s) for downlink channel estimation. Some examples also include reporting from the UE(s) to the base station of downlink channel parameters, which the base station can use to reconstruct channel information.

Future wireless communication (e.g., next generation communication) will utilize carrier frequencies ranging from GHz to THz, enabling the inclusion of more antennas within reasonable device sizes for both gNBs and UEs. This presents opportunities for multi-layer multiple input, multiple output (MIMO) communications to enhance capacity, and higher directivity in beamforming to extend the cell range of existing sites. However, a potential drawback of having more gNB and UE antennas is the increased number of required Reference Signal (RS) resources for complete channel estimation using current standard methods.

By increasing the carrier frequency in wireless communication (e.g., to GHz and THz in expected future wireless communication) will results in an increase in the spatial degrees of freedom (DoF) for fixed-size transmit and receive antenna arrays at short distances. As a result, the system capacity will increase in both uplink and downlink direction. However, the far-field assumption will not hold in some scenarios. In the near-field scenario, at higher frequencies, it cannot be accurately assumed that all the receive (or transmit) antennas are co-located in a single point from the perspective of the transmitter (or receiver). This means that the angle, distance, phase difference, etc., between any transmitter antenna and any receive antenna, can notably vary depending on the selected antenna pair. Furthermore, the assumption of a planar wave arriving at the receiver is invalid, and instead, a spherical wave behavior should be considered.

As mentioned previously, in the far-field scenario, the receive (or transmit) antennas are assumed to be co-located in a single point from the perspective of the transmitter (or receiver). Therefore, the antenna array geometry has a negligible impact on the channel properties. However, in near-field scenarios, the geometry of the antenna (array) locations can significantly affect MIMO channel properties. To fully utilize the benefits that a high-rank channel can provide, a comprehensive sounding of the antenna-wise channel is necessary. As the number of base station(s) (e.g., gNB(s)) antennas increase, a greater number of RS resources are required for complete channel estimation using current standard methods. Additionally, when increasing the number of UEs, the RS resources required for sounding may increase even with UE-specific Channel State Information Reference Signal (CSI-RS) sounding.

The near-field regime in short-range communication opens up new opportunities, as the channel matrix can be high rank, even with line-of-sight links. This allows for multi-layer MIMO communications, even with line-of-sight (LoS) channels. The near-field assumption is already valid at room scale for the mid-to-high frequency range (7 to 20 GHz), such that the technology can enhance UE data rate performance, particularly for indoor applications.

In examples where base station and/or antenna count is increased (e.g., this could be useful at mid-to-high carrier frequencies), the capacity of a system may be increased, allowing for the possibility of high-rank channels, even with LoS channels (for example at short range). To exploit the high-rank channel properties, the channels can be sounded in an antenna-wise manner. In some examples, an antenna-wise channel matrix is created. To perform sounding based on relationships between transmitter antennas and receiver antennas, sounding can be performed. This process can increase the number of reference signal (RS) resources used for sounding, resulting in a high (potentially even prohibitively high) pilot overhead. Pilot signals may include any reference signal, such as CSI-RS or Sounding Reference Signals (SRS), for example.

In near-field (but sometimes also possibly in far-field), LoS communication enables the exploitation of known transmit antenna geometry, i.e., the way the antennas or antenna arrays are positioned at the transmitter.

If the antenna locations of a few reference antennas are known, the full channel can be reconstructed using the geometry of other antennas with respect to the reference antennas. Thus, the network overhead for channel estimation can be reduced.

Some examples describe a UE configuration for UE(s) assisted, geometry-aided downlink channel estimation. Some examples also describe reporting from the UE(s) to a base station. Examples receive the pilot overhead to measure a downlink channel at a single or multiple UE(s). Some examples provide a method for high-rank channel estimation. High-rank channels can be used to increase network efficiency. Some examples also take into account a position of a UE as it is rotated.

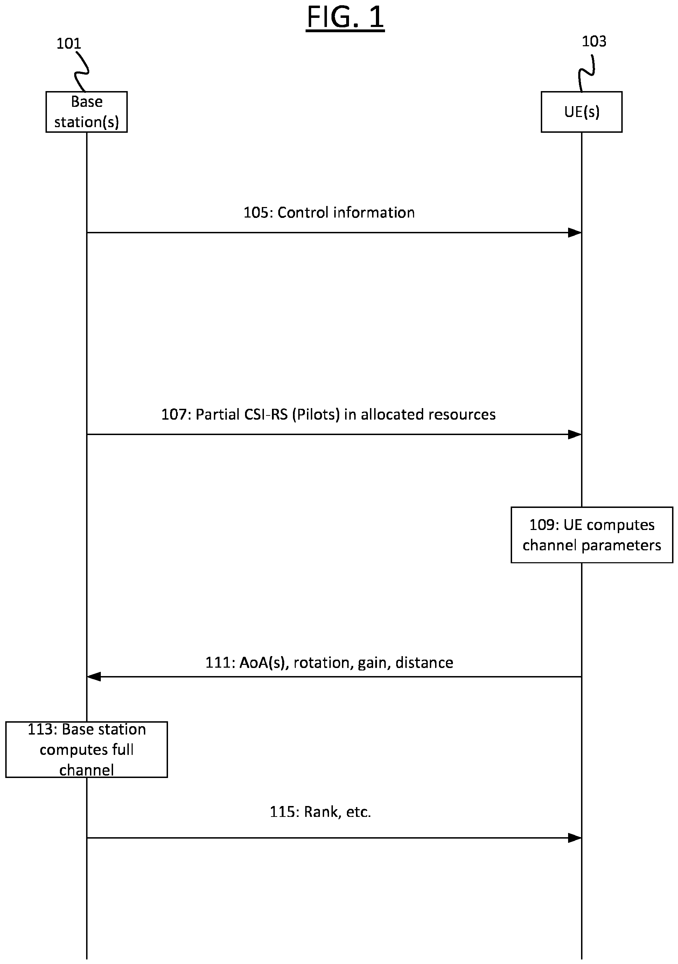

FIG. 1 shows an example message flow between at least one base station 101 and at least one UE 103. In FIG. 1, base station 101 performs geometry-aided channel estimation with the aid of information provided by UE 103 as feedback. In some examples, the channel estimation is performed using information available from prior transmissions (e.g., random access protocol) as well as the information provided by UE 103 as feedback in FIG. 1. Information available from prior transmissions may include power headroom reporting or UE position, for example.

Although a single base station 101 and UE 103 is discussed with reference to FIG. 1 below, it will be understood that the same principles can be applied to more than one UE or more than one base station.

Base station 101 may be aware of a capability of UE 103 to receive configuration information as described at 105. According to some examples, this capability may be signalled to base station 101 prior to the method of FIG. 1.

According to some examples, the geometry of the antennas of UE 103 with respect to at least one reference antenna of UE 103 may be known to base station 101. According to some examples, the geometry of the antennas of UE 103 with respect to at least one reference antenna may be known to UE 103. According to some examples, a partial geometry of the antennas of base station 101 with respect to at least one reference antenna may be known to UE 103, wherein the partial geometry comprises a geometry of active antennas at the base station 101.

In FIG. 1, base station 101 transmits configuration information to UE 103 at 105. At 107, Base station 101 transmits reference signals (aka CSI-RS or SRS) on a subset of all antenna ports of base station 101. A subset of antennas as described herein may comprise less than all antennas of a device. A subset of antennas may include a single antenna. At 109, based on the transmitted reference signals, UE 103 provides measurements to the base station 101.

The measurements may comprise partial channel state information. At 111, UE 103 sends the measurements to base station 101. At 113 base station 101, based on the received measurements and based on the geometry of the UE antennas, reconstructs the full channel state information. At 115, information based on the full channel state information may be sent to UE 103. Each of these steps is considered in further detail below.

At 105, base station(s) 101 sends configuration information (referred to as control information in FIG. 1) to UE(s) 103. The configuration information describes features of the partial CSI-RS sent from base station(s) 101 to UE 103 at 107. The configuration information may indicate to UE 103 which information to feedback to base station(s) 107 at 111. The configuration information may be used to compute channel parameters at 109. The configuration information may be used at 113 by base station 101 to compute the full channel. The configuration information may comprise at least one of:
- Antenna geometry of the base station 101;
- Analog beams used at base station 101;
- An indication of at least one UE 103 antenna;
- An indication of resources used for at least one reference signal;
- An indication of a type of channel feedback to provide for at least one reference signal.

Each of these are discussed in more detail below. Different parameters may be included in the configuration information based on base station 101 capabilities and/or on UE 103 capabilities.

The antenna geometry of base station 101 may include a geometry of active antennas at base station 101. This may include distance between each active antenna at base station 101. According to some examples, antenna geometry of base station 101 comprises a partial geometry, wherein the partial geometry comprises a geometry of active antennas at base station 101. The antenna geometry may include an indication of active base station antennas at base station 101, for example a number of active base station antennas. In some examples, not all antennas of base station 101 are used as active base station antennas. The indication may also include TCI states of active base stations and/or identifiers of beams (if UE 103 knows the codebook of base station 101, it can use the identifier to identify active base station beams). The antenna geometry may include a reference antenna of base station 101.

In examples where base station 101 is capable of hybrid digital-analog beamforming, base station 101 may also include a description of analog beams used at base station 101 in the configuration information sent at 105.

The indication of at least one antenna for UE 103 may also be included in the configuration information sent at 105. The UE 103 antenna information may include a reference antenna to use for measurements at UE 103. UE 103 antenna information may include an indication of UE active antennas for measurement at UE 103. UE 103 antenna information may also include analog beams to be used at UE 103.

The indication of resources to use for at least one reference signal included in configuration information sent at 105 may indicate resources used for downlink sounding, such as time resources, frequency resource or code resources. Resource information may also include a type of sounding, e.g., CDMA (Code Division Multiplex Access) or TDMA (Time Division Multiplex Access).

The indication of a type of channel feedback to provide for at least one reference signal included in configuration information sent at 105 may include a type of channel feedback. This may include an indication of which active antenna measurements reported back from UE 103 to base station 101. This indication may include, for example:
- An indication of whether UE 103 should report measurements for each active antenna separately;
- An indication of whether UE 103 reports only a single set of measurements with respect to a reference signal of an active base station 101 antenna (in such examples, base station 101 geometry can be used by UE 103);
- An indication of whether Angle of Arrival (AoA)should be provided by UE 103 for reference signal(s) from base station 101 - the format for these measurements can also be specified;
- An indication of whether UE 103 rotation measurements with respect to base station 101 active antennas or reference antenna should be provided by UE 103 to base station 101;
- An indication of whether channel gain measurements should be provided (with format)
- An indication of whether distance form UE 103 reference antennas to base station 101 reference antenna or active antennas.

The configuration information at 105 may be broadcast from at least one base station 101 as broadcast, multicast or unicast to at least one user equipment 103. In examples, if the configuration information is needed at multiple UEs, then base station 101 transmits the configuration information as a broadcast/multicast signal, which includes, base station 101 partial geometry, gNB active antennas, UE references antenna type (if the same for all, for example, one example could be: if all the UE antenna structure is the same, then base station 101 can dictate to use the topmost UE antenna as a reference antenna for the measurements), CSI-RS resources as well as the reporting format.

At 107, base station 101 transmits at least one reference signal (e.g., CSI-RS, SRS) for partial channel information at UE 103. The reference signal(s) transmission at 107 may be in line with the indications made in the configuration information sent at 105. The at least one reference signal may be sent from a set of active antennas of base station 101.

At 109, UE 103 measures the partial channel-related parameters from the active antenna(s) or reference antenna of base station 101. In some examples the measurements are made for the same reference signal on different channels. The channel parameters configured in the configuration information at 105 can be used to compute partial channel parameters, which are then send to base station 101 at 111. The channel-related parameters from the same CSI-RS and provide feedback to the gNB(s) as commanded by the network. The feedback may include any of the following parameters:
i. AoAs (azimuth and elevation), with the specific format.
ii. UE Rotation.
iii. Channel gains with the format.
iv. Distance.

At 113, base station 101 computes full channel information from the partial channel-related parameters. This reconstruction can be based on the geometry of the UE 103 antenna arrays.

Channels can be reconstructed using AoA(s) measurements and distance measurements from UE antenna(s) to base station antenna(s). Methods for such reconstruction are discussed in:
- S. Eslami, B. Gouda, A. Tölli, D. Kumar, 'Geometry-Aided Joint Estimation of Short-Range MIMO Channels with Hybrid Transceivers' ICC workshop, Jun.2023;
- J. Kaleva, N. J. Myers, A. Tölli, and R. W. Heath, "A geometry-aided message passing method for AoA-based short range MIMO channel estimation," in Proc. IEEE Int. Workshop Signal Process. Adv. in Wireless Commun. (SPAWC), Jul. 2019; and
- N. J. Myers, J. Kaleva, A. Tölli, and R. W. Heath, "Message passing-based link configuration in short range millimeter wave systems," IEEE Trans. Commun., vol. 68, no. 6, pp. 3465-3479, Jun. 2020.

At 115, based on the determination at 115, base station 101 may indicate to UE 103 information describing parameters for communication. This may include:
- a number of data streams that can be used;
- a best antenna configuration for UE 103;
- a best analog beam configuration; and/or
- training resources for the UE beamformer computation.

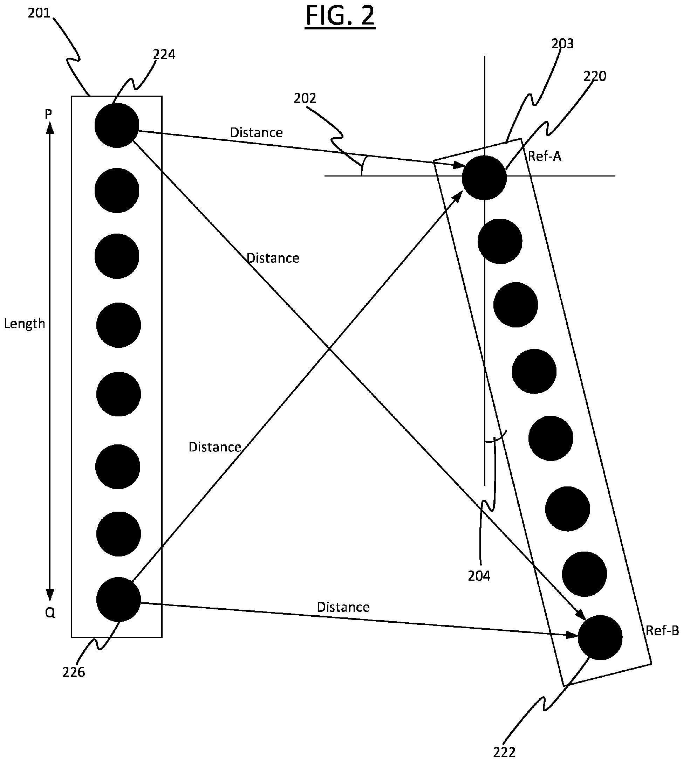

FIG. 2 shows an example of an antenna array at base station 201 (which may comprise a gNB, for example) and an antenna array at UE 203. Each antenna is represented by a circle.

UE 203 can measure an AoA 202 from antenna P 224 or antenna Q 226 to a reference antenna 220 (Ref-A) of UE 203. Channel gains can also be measured. Distance from P 224 to antenna 220 and distance from Q 226 to antenna 220 can also be measured, as well as the relative rotation 204 of UE 203 with respect to base station 201 antennas P 224 and Q 226. The relative rotation can be determined using a partial geometry of base station 201 antennas at UE 203. In some examples, relative rotation of a reference antenna (e.g., antenna 220) of UE 203 with respect to base station 201 antennas P 224 and Q can be determined using a partial geometry of base station 201 antennas at UE 203. These measurements can then be sent from UE 203 to base station 201. Base station 201 can use these measurements to reconstruct the channel based on the feedback parameters. The feedback parameters could be based on the configuration information sent at 105 in Figure 1.

The reconstructed channel information could comprise channel gains, distance and/or AoA from antenna 224 (P) to antenna 220 (Ref-A). The reconstructed channel information could comprise channel gains, distance and/or AoA from antenna 226 (Q) to antenna 220 (Ref-A).

AoA measurements can be determined at UE 203 using two reference UE antennas, for example antenna 220 (Ref-A) and antenna 222 (Ref-B).

In some examples, UE 203 may use all antennas to measure reference signal(s) from based station 101. This can provide more accurate estimates of AoAs and UE rotation.

Examples described herein provide a method for determining channel state information between a base station and a user equipment based on a reference signal from a subset of antennas of either or both of the base station and the user equipment. By using a subset of antennas at the base station and/or at the user equipment, signalling overhead is reduced.

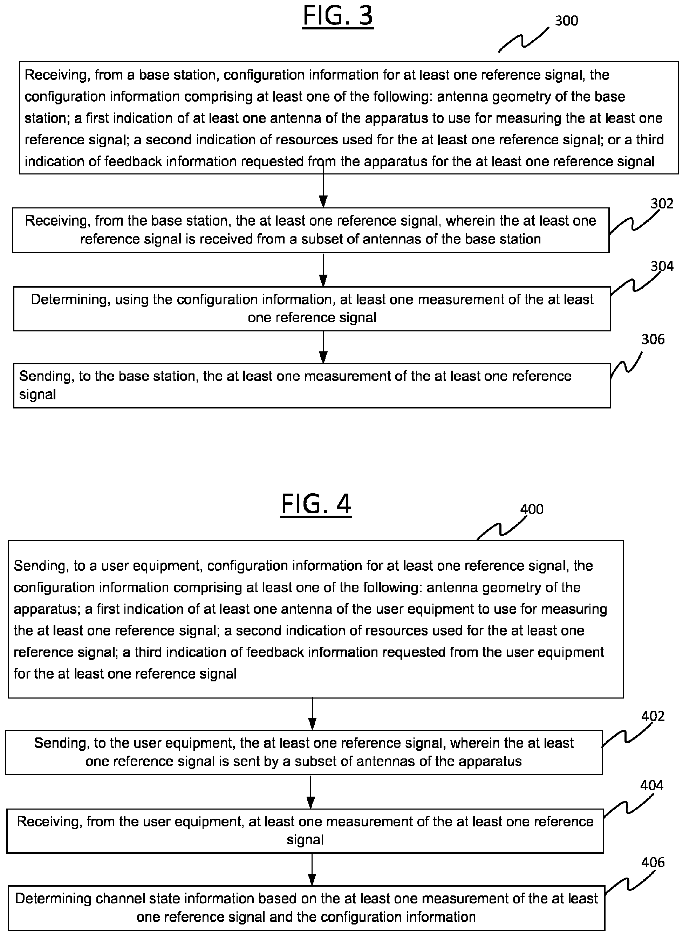

FIG. 3 shows an example method flow. The method may be performed by an apparatus such as UE 103 or UE 203, for example.

At 300, the method comprises receiving, from a base station, configuration information for at least one reference signal, the configuration information comprising at least one of the following: antenna geometry of the base station; a first indication of at least one antenna of the apparatus to use for measuring the at least one reference signal; a second indication of resources used for the at least one reference signal; or a third indication of feedback information requested from the apparatus for the at least one reference signal.

At 302, the method comprises receiving, from the base station, the at least one reference signal, wherein the at least one reference signal is received from a subset of antennas of the base station. The subset may comprise fewer than all antennas of the base station.

At 304, the method comprises determining using the configuration information received at 300, at least one measurement of the at least one reference signal.

At 306, the method comprises sending, to the base station, the at least one measurement of the at least one reference signal.

FIG. 4 shows an example method flow. The method may be performed by a base station (e.g., gNB) such as base station 101 or base station 201.

At 400, the method comprises sending, to a user equipment, configuration information for at least one reference signal, the configuration information comprising at least one of the following: antenna geometry of the apparatus; a first indication of at least one antenna of the user equipment to use for measuring the at least one reference signal; a second indication of resources used for the at least one reference signal; a third indication of feedback information requested from the user equipment for the at least one reference signal.

At 402, the method comprises sending, to the user equipment, the at least one reference signal, wherein the at least one reference signal is sent by a subset of antennas of the apparatus. The subset may comprise fewer than all of the antennas of the apparatus.

At 404, the method comprises receiving, from the user equipment, at least one measurement of the at least one reference signal.

At 406, the method comprises determining channel state information based on the at least one measurement of the at least one reference signal and the configuration information.

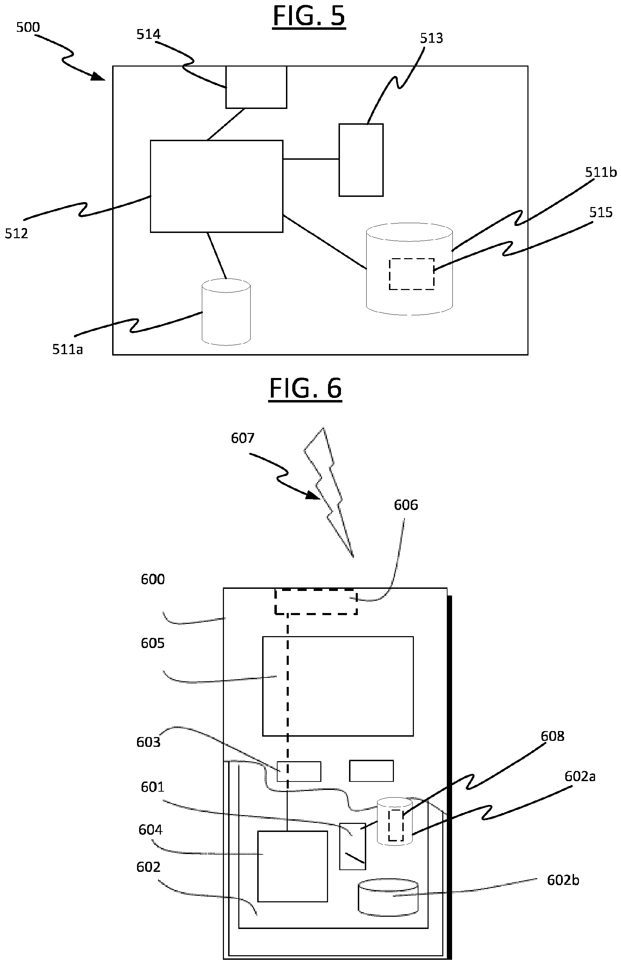

FIG. 5 illustrates an example of a control apparatus 560 for controlling a network. The control apparatus may comprise at least one random access memory (RAM) 511a, at least on read only memory (ROM) 511b, at least one processor 512, 513 and an input/output interface 514. The at least one processor 512, 513 may be coupled to the RAM 511a and the ROM 511b. The at least one processor 512, 513 may be configured to execute an appropriate software code 515. The software code 515 may, for example, allow the at least one processor 512, 513 to perform one or more steps of any method flow described herein. The software code 515 may be stored in the ROM 511b. The control apparatus 500 may be interconnected with another control apparatus 500 controlling another function of the RAN or the core network.

FIG. 6 illustrates an example of a terminal 600, such as a UE. The terminal 600 may be provided by any device capable of sending and receiving radio signals. In some examples, the terminal may comprise a user equipment, a mobile station (MS) or mobile device, such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 600 may provide, for example, communication of data for carrying communications. The communications may be one or more of voice, electronic mail (email), text message, multimedia, data, machine data and so on.

The terminal 600 may be configured to receive signals over an air or radio interface 607 via appropriate apparatus for receiving and may transmit signals via appropriate apparatus for transmitting radio signals. In FIG. 6, transceiver apparatus is designated schematically by block 606. The transceiver apparatus 606 may be provided, for example, by means of a radio part and associated antenna arrangement. The antenna arrangement may be arranged internally or externally to the mobile device.

The terminal 600 may be provided with at least one processor 601, at least one memory ROM 602a, at least one RAM 602b and other possible components 603 and 604 for use in software and hardware aided execution of tasks it is designed to perform, including control of access to and communications with access systems and other communication devices. The at least one processor 601 is coupled to the RAM 602b and the ROM 602a. The at least one processor 601 may be configured to execute an appropriate software code 608. The software code 608 may for example allow to perform one or more of steps of any method flow described herein. The software code 608 may be stored in the ROM 602a.

The processor, storage and other relevant control apparatus can be provided on an appropriate circuit board and/or in chipsets. This example is denoted by reference 602. The device may optionally have a user interface, such as key pad 605, touch sensitive screen or pad, combinations thereof or the like. Optionally, one or more of a display, a speaker and a microphone may be provided depending on the type of the device.

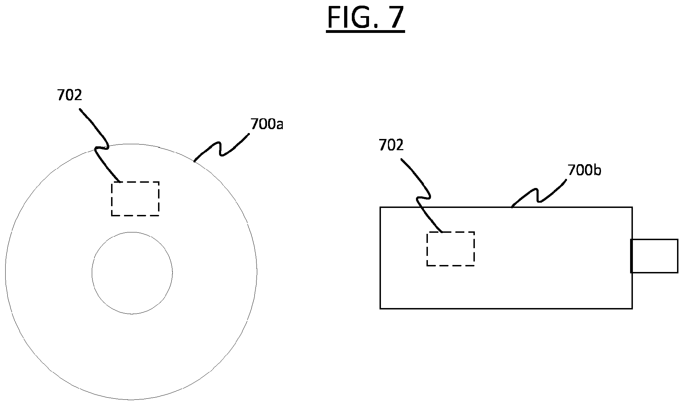

FIG. 7 shows a schematic representation of non-volatile memory media 700a (e.g. computer disc (CD) or digital versatile disc (DVD)) and 700b (e.g. universal serial bus (USB) memory stick) storing instructions and/or parameters 702 which when executed by a processor allow the processor to perform one or more of the steps of any method flow described herein.

It should be understood that the apparatuses may comprise or be coupled to other units or modules etc., such as radio parts or radio heads, used in or for transmission and/or reception. Although the apparatuses have been described, in some examples as one entity, different modules and memory may be implemented in one or more physical or logical entities.

It is noted that whilst some examples have been described in relation to 5G networks, similar techniques and/or mechanisms can be applied in relation to other networks and communication systems (e.g., 6G and beyond). Therefore, although certain examples were described above, by way of illustration with reference to certain example architectures for wireless networks, technologies and standards, other examples may be applied to any other suitable forms of communication systems than those illustrated and described herein.

It is also noted herein that while the above details various examples, there are several variations and modifications which may be made to any of the aforementioned example solutions without departing from the scope of the examples described herein.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various examples may be implemented in hardware or special purpose circuitry, software, logic or any combination thereof. Some examples detailed in the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following examples:
(a) hardware-only circuit implementations (such as, implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The various examples detailed in the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out one or more steps of any method flow described herein. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as DVD and the data variants thereof, CD. The physical media may be implemented as a non-transitory media.

The term "non-transitory," as used herein, is a limitation of the medium itself (e.g., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Examples of the subject disclosure may be practiced in various components, such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for the various examples described herein is set out by the independent claims. The examples, if any, described herein that do not fall under the scope of the independent claims are to be interpreted as examples useful for understanding various facets of the subject disclosure.

The foregoing description has provided by way of non-limiting examples to provide a full and informative description the subject disclosure. However, various modifications and adaptations may become apparent to those skilled in the relevant arts in view of the foregoing description, when read in conjunction with the accompanying drawings and the claims. However, all such and similar modifications of the teachings of this disclosure will still fall within the scope of the examples described herein. Indeed, there is a further example comprising a combination of one or more examples with any of the other example previously described herein.

## Claims

1. An apparatus comprising:
means for receiving, from a base station, configuration information for at least one reference signal, the configuration information comprising at least one of the following:
antenna geometry of the base station;
a first indication of at least one antenna of the apparatus to use for measuring the at least one reference signal;
a second indication of resources used for the at least one reference signal; or
a third indication of feedback information requested from the apparatus for the at least one reference signal; wherein the apparatus comprises:
means for receiving, from the base station, the at least one reference signal, wherein the at least one reference signal is received from a subset of antennas of the base station;
means for determining, using the configuration information, at least one measurement of the at least one reference signal;
means for sending, to the base station, the at least one measurement of the at least one reference signal.

2. An apparatus according to claim 1, wherein the configuration information comprises the antenna geometry of the base station, and wherein the antenna geometry of the base station comprises at least one of the following:
a geometry of active antennas at the base station;
a distance between active antennas of the base station;
a fourth indication of at least one active antenna at the base station; or
a fifth indication of a reference antenna of the base station.

3. An apparatus according to claim 1 or claim 2, wherein the configuration information comprises the first indication of at least one antenna of the apparatus to use, and wherein the first indication of at least one antenna of the apparatus to use comprises at least one of the following:
a sixth indication of at least one active antenna at the apparatus;
a seventh indication of a reference antenna of the apparatus; or
an eighth indication of beams of the apparatus.

4. An apparatus according to any preceding claim, wherein the configuration information comprises the second indication of resources used for the at least one reference signal, the second indication of resources used for the at least one reference signal comprising at least one of the following:
a ninth indication of at least one time resource;
a tenth indication of at least one frequency resource; or
an eleventh indication of at least one code resource.

5. An apparatus according to any preceding claim, wherein the configuration information comprises the third indication of feedback information requested from the apparatus for the at least one reference signal, the third indication of feedback information requesting at least one of the following:
a twelfth indication of whether the apparatus should report measurements for each active antenna of the apparatus separately;
a thirteenth indication of whether the apparatus should report a single set of measurements with respect to a reference signal of the base station;
a fourteenth indication of whether Angle of Arrival, AoA, measurements for at least one reference signal should be provided by the apparatus;
a fifteenth indication of whether at least one apparatus rotation measurement with respect to the base station should be provided by the apparatus;
a sixteenth indication of whether channel gain measurements for at least one reference signal should be provided by the apparatus; or
a seventeenth indication of whether distance from at least one apparatus reference antenna to a base station reference antenna should be provided.

6. An apparatus according to any preceding claim, wherein the apparatus comprises:
means for receiving, from the base station, an indication of channel state information determined by the base station based on the at least one measurement of the at least one reference signal;
means for performing data transmission and/or data reception based on the channel state information.

7. An apparatus according to claim 6, wherein the data transmission and/or the data reception comprises near-field communication.

8. A method performed by a user equipment comprising:
receiving, from a base station, configuration information for at least one reference signal, the configuration information comprising at least one of the following:
antenna geometry of the base station;
a first indication of at least one antenna of the user equipment to use for measuring the at least one reference signal;
a second indication of resources used for the at least one reference signal;
a third indication of feedback information requested from the user equipment for the at least one reference signal; wherein the method comprises;
receiving, from the base station, the at least one reference signal, wherein the at least one reference signal is received from a subset of antennas of the base station;
determining, using the configuration information, at least one measurement of the at least one reference signal;
sending, to the base station, the at least one measurement of the at least one reference signal.

9. A computer program comprising instructions stored thereon for performing at least the following:
receiving, from a base station, configuration information for at least one reference signal, the configuration information comprising at least one of the following:
antenna geometry of the base station,
a first indication of at least one antenna of an user equipment to use for measuring the at least one reference signal,
a second indication of resources used for the at least one reference signal,
a third indication of feedback information requested from the user equipment for the at least one reference signal; and at least the following:
receiving, from the base station, the at least one reference signal, wherein the at least one reference signal is received from a subset of antennas of the base station;
determining, using the configuration information, at least one measurement of the at least one reference signal;
sending, to the base station, the at least one measurement of the at least one reference signal.

10. An apparatus comprising:
means for sending, to a user equipment, configuration information for at least one reference signal, the configuration information comprising at least one of the following:
antenna geometry of the apparatus;
a first indication of at least one antenna of the user equipment to use for measuring the at least one reference signal;
a second indication of resources used for the at least one reference signal;
a third indication of feedback information requested from the user equipment for the at least one reference signal; wherein the apparatus comprises:
means for sending, to the user equipment, the at least one reference signal, wherein the at least one reference signal is sent by a subset of antennas of the apparatus;
means for receiving, from the user equipment, at least one measurement of the at least one reference signal;
means for determining channel state information based on the at least one measurement of the at least one reference signal and the configuration information.

11. An apparatus according to claim 10, wherein the channel state information is for a plurality of antennas of the apparatus, wherein the subset of antennas is a subset of the plurality of antennas of the apparatus.

12. An apparatus according to any of claim 10 or claim 11, wherein the configuration information comprises the antenna geometry of the apparatus, and wherein the antenna geometry of the apparatus comprises at least one of the following:
a geometry of active antennas at the apparatus;
a distance between active antennas of the apparatus;
a fourth indication of at least one active antenna at the apparatus; or
a fifth indication of a reference antenna of the apparatus.

13. An apparatus according to any of claims 10 to 12, wherein the configuration information comprises the first indication of at least one antenna of the user equipment to use for measuring the at least one reference signal, and wherein the first indication of at least one antenna of the user equipment to use comprises at least one of the following:
a sixth indication of at least one active antenna at the user equipment;
a seventh indication of a reference antenna of the user equipment; or
an eighth indication of beams of the user equipment.

14. A method comprising:
sending, to a user equipment, configuration information for at least one reference signal, the configuration information comprising at least one of the following:
antenna geometry of a base station;
a first indication of at least one antenna of the user equipment to use for measuring the at least one reference signal;
a second indication of resources used for the at least one reference signal; or
a third indication of feedback information requested from the user equipment for the at least one reference signal; wherein the method comprises:
sending, to the user equipment, the at least one reference signal;
receiving, from the user equipment, at least one measurement of the at least one reference signal, wherein the at least one reference signal is sent by a subset of antennas of the base station;
determining channel state information based on the at least one measurement of the at least one reference signal and the configuration information.

15. A computer program comprising instructions stored thereon for performing at least the following:
sending, to a user equipment, configuration information for at least one reference signal, the configuration information comprising at least one of the following:
antenna geometry of a base station;
a first indication of at least one antenna of the user equpment to use for measuring the at least one reference signal;
a second indication of resources used for the at least one reference signal;
a third indication of feedback information requested from the user equipment for the at least one reference signal; and at least the following:
sending, to the user equipment, the at least one reference signal;
receiving, from the user equipment, at least one measurement of the at least one reference signal, wherein the at least one reference signal is sent by a subset of antennas of the base station;
determining channel state information based on the at least one measurement of the at least one reference signal and the configuration information.
